# EUROPÄISCHE PATENTANMELDUNG

(11) **EP 4 467 451 A1**
(43) Veröffentlichungstag der Anmeldung: **27.11.2024**
(21) Anmeldenummer: 23174818.7
(22) Anmeldetag: 23.05.2023
(51) Int. Cl.: B64C 31/06, B63H 9/072

(54) **KITESYSTEM UND VERFAHREN ZUM BETREIBEN EINES KITESYSTEMS**

(71) Anmelder: SkySails Power GmbH, 20537 Hamburg (DE)
(72) Erfinder: Fimpel, Georg, 20537 Hamburg (DE); Bungart, Merlin, 20537 Hamburg (DE)
(74) Vertreter: Glawe, Delfs, Moll

(57) **Zusammenfassung**

Kitesystem mit einem Kite (14), mit einer Gondel (25) und mit einem Leinenbaum (24), wobei der Kite (14) über den Leinenbaum (24) an die Gondel (25) angebunden ist. Der Leinenbaum (24) umfasst einen Verzweigungsblock (27, 28). Der Verzweigungsblock (27, 28) ist über einen Steuerzug (35, 36) an die Gondel (25) angeschlossen. Der Leinenbaum (24) umfasst einen ersten Zugstrang (48), der sich zwischen dem Verzweigungsblock (27, 28) und einem ersten Anlenkpunkt (61) des Kites (14) erstreckt. Der Leinenbaum (24) umfasst einen zweiten Zugstrang (49), der sich zwischen dem Verzweigungsblock (27, 28) und einem zweiten Anlenkpunkt (62) des Kites (14) erstreckt. Mit einem Steuermechanismus (39) wird die Länge des Steuerzugs (35, 36) zwischen der Gondel (25) und dem Verzweigungsblock (27, 28) verändert. Mit einem Trimmmechanismus (40) wird die Länge des ersten Zugstrangs (48) zwischen dem Verzweigungsblock (27, 28) und dem ersten Anlenkpunkt (61) verändert. Die Erfindung betrifft auch ein Verfahren zum Betreiben eines Kitesystems.

## Beschreibung

Die Erfindung betrifft ein Kitesystem und ein Verfahren zum Betreiben eines Kitesystems.

Ein Kite, der über ein Zugseil gehalten ist, kann durch geeignete Einstellung der aerodynamischen Eigenschaften entlang von Flugbahnen bewegt werden, die im Wesentlichen senkrecht zu dem Zugseil ausgerichtet sind. Während der Bewegung des Kite entlang der Flugbahnen wird eine Zugkraft auf das Zugseil ausgeübt. Die Zugkraft kann beispielsweise zum Erzeugen elektrischer Energie oder als Antriebskraft für ein Schiff genutzt werden.

Im normalen Betrieb des Kitesystems, in dem eine hohe Zugkraft gewünscht ist, wird der Kite so gesteuert, dass er sich innerhalb eines Windfensters bewegt, innerhalb dessen der Wind eine starke Kraft auf den Kite ausübt. Bislang ist es üblich, den Kite zum Einholen an den Rand des Windfensters zu steuern, wo die vom Wind auf den Kite ausgeübte Kraft deutlich kleiner ist, WO 2007/112 993 A1. Dies ist mit einem Zeitverlust verbunden, weil der Kite vor dem Einholen zunächst die Strecke bis zum Rand des Windfensters zurücklegen muss.

Der Erfindung liegt die Aufgabe zugrunde, ein Kitesystem und ein Verfahren zum Betreiben eines Kitesystems vorzustellen, mit denen diese Nachteile vermieden werden. Die Aufgabe wird gelöst mit den Merkmalen der unabhängigen Ansprüche. Vorteilhafte Ausführungsformen sind in den Unteransprüchen angegeben.

Ein erfindungsgemäßes Kitesystem umfasst einen Kite, eine Gondel und einen Leinenbaum. Der Kite ist über den Leinenbaum an die Gondel angebunden. Der Leinenbaum umfasst einen Verzweigungsblock, der über einen Steuerzug an die Gondel angeschlossen ist. Der Leinenbaum umfasst einen ersten Zugstrang, der sich zwischen dem Verzweigungsblock und einem ersten Anlenkpunkt des Kites erstreckt. Der Leinenbaum umfasst einen zweiten Zugstrang, der sich zwischen dem Verzweigungsblock und einem zweiten Anlenkpunkt des Kites erstreckt. Das Kitesystem ist mit einem Steuermechanismus ausgestattet, um die Länge des Steuerzugs zwischen der Gondel und dem Verzweigungsblock zu verändern. Das Kitesystem ist mit einem Trimmmechanismus ausgestattet, um die Länge des ersten Zugstrangs zwischen dem Verzweigungsblock und dem ersten Anlenkpunkt zu verändern.

Mit der Erfindung wird vorgeschlagen, einen Trimmmechanismus mit dem Steuermechanismus des Kitesystems zu koppeln. Der Steuermechanismus kann dazu ausgelegt sein, die Flugrichtung des Kites zu beeinflussen. Der Trimmmechanismus kann dazu ausgelegt sein, Einfluss auf den Anstellwinkel des Kites zu nehmen. Durch die Kopplung zwischen Steuermechanismus und Trimmmechanismus wird es möglich, den Anstellwinkel zu verändern, während gleichzeitig die Steuerfähigkeit erhalten bleibt. Es kann also beispielsweise der Kite in einen anderen Anstellwinkel gebracht werden und in diesem Zustand entlang vorgegebener Flugbahnen gesteuert werden, ohne dass eine Anpassung des Steuermechanismus an den geänderten Anstellwinkel erforderlich ist.

Das Kitesystem kann ein Zugseil umfassen, das sich von der Gondel bis zu einem Kraftaufnahmepunkt auf der Erde erstreckt. Der Kraftaufnahmepunkt kann beispielsweise auf einem Schiff angeordnet sein, sodass eine auf den Kraftaufnahmepunkt wirkende Zugkraft als Antriebskraft für das Schiff wirkt. In einer anderen Ausführungsform wirkt die Zugkraft des Kites über den Kraftaufnahmepunkt auf einen Generator, um elektrische Energie zu erzeugen. Der Kite kann sich von dem Kraftaufnahmepunkt entfernen, während elektrische Energie erzeugt wird, sodass der Generator durch eine Bewegung des Zugseils angetrieben wird. Wird das Kitesystem für den Betrieb eines Schiffs verwendet, so kann der Abstand zwischen der Gondel und dem Kraftaufnahmepunkt konstant bleiben.

Die momentane Flugrichtung des Kites kann einen rechten Winkel mit der Richtung des Zugseils schließen, also mit der Richtung, in der das Zugseil an der Gondel zieht. Der Steuerzug kann in einer Ebene angeordnet sein, die orthogonal zur momentanen Flugrichtung ausgerichtet ist. Durch eine Betätigung des Steuerzugs kann eine Rollbewegung des Kites ausgelöst werden, mit der der Kite insgesamt oder ein Abschnitt des Kites um eine zur Flugrichtung parallele Achse geschwenkt wird. Eine solche Rollbewegung des Kites hat zur Folge, dass die Flugbahn des Kites sich krümmt, dass der Kite also eine Kurve fliegt. Mit dem Durchfliegen der Kurve geht eine Drehung des Kites um die Richtung des Zugseils einher.

In einer Ausführungsform umfasst das Kitesystem einen ersten Steuerzug und einen zweiten Steuerzug, wobei der erste Steuerzug auf einen anderen Abschnitt des Kites wirkt als der zweite Steuerzug. Jeder der Steuerzüge kann die genannten Merkmale des einen Steuerzugs aufweisen. Der erste Steuerzug und der zweite Steuerzug können auf zwei Seiten einer durch das Zugseil und die Flugrichtung aufgespannten Längs-Mittelebene des Kites angeordnet sein. Der Steuermechanismus kann so eingerichtet sein, dass der erste Steuerzug und der zweite Steuerzug miteinander gekoppelt sind. Die Kopplung kann so gestaltet sein, dass der erste Steuerzug verkürzt wird, wenn der zweite Steuerzug verlängert wird, und umgekehrt. Das Kitesystem kann so eingerichtet sein, dass der Kite eine Rollbewegung vollführt.

Der Trimmmechanismus kann dazu ausgelegt sein, eine Nickbewegung des Kites um eine Nickachse auszulösen. Als Nickbewegung wird eine Bewegung bezeichnet, bei der der Kite oder ein Teil des Kites um eine Nickachse gedreht wird, die mit der Flugrichtung einen rechten Winkel einschließt. Die Nickachse kann weiter mit der Zugrichtung einen rechten Winkel einschließen, also der Richtung, in der Zugkräfte zwischen dem Kite und dem Verzweigungsblock übertragen werden. Aufgrund der gewölbten Form des Kites hängt die lokale Zugrichtung davon ab, wie groß der Abstand zur Längs-Mittelebene des Kites ist. Der Winkel zwischen der Richtung des Zugseils und der lokalen Zugrichtung wird desto größer, je größer der Abstand zwischen dem Anlenkpunkt und der Längs-Mittelebene ist. Die Nickbewegung bezieht sich deswegen jeweils auf eine lokale Nickachse, die für die Längsebene des Kites gilt, innerhalb derer die an der Nickbewegung beteiligten Anlenkpunkte angeordnet sind.

Die Nickachse kann einen konstanten Abstand zu dem Verzweigungsblock haben. Das Kitesystem kann eine Leine umfassen, die sich zwischen einem bei der Nickachse gelegenen Anlenkpunkt und dem Verzweigungsblock erstreckt. Die Leine kann eine Verbindung von fester Länge zwischen dem Verzweigungsblock und dem Anlenkpunkt des Kites bilden.

Der Trimmmechanismus kann dazu ausgelegt sein, sowohl die Länge des ersten Zugstrangs zwischen dem Verzweigungsblock und dem ersten Anlenkpunkt als auch die Länge des zweiten Zugstrangs zwischen dem Verzweigungsblock und dem zweiten Anlenkpunkt zu verändern. Sind der erste Anlenkpunkt und der zweite Anlenkpunkt auf zwei Seiten der Nickachse angeordnet, so kann eine Nickbewegung ausgelöst werden, indem der erste Zugstrang verlängert wird und der zweite Zugstrang verkürzt wird oder umgekehrt. Es kann eine Leine geben, die sich zwischen dem Verzweigungsblock und einem dritten Anlenkpunkt des Kite erstreckt. Der erste Anlenkpunkt, der zweite Anlenkpunkt und der dritte Anlenkpunkt können einen Satz von Anlenkpunkten bilden. Mehrere Anlenkpunkte bilden einen Satz, wenn sie in einer Ebene angeordnet sind, die parallel zu einer Ebene ist, die durch die momentane Flugrichtung und die lokale Zugrichtung aufgespannt wird. Die Anlenkpunkte eines Satzes von Anlenkpunkten können mit der Trimmvorrichtung koordiniert angesteuert werden, um die Nickbewegung des Kites auszulösen. Der erste Zugstrang und der zweite Zugstrang können dazu über den Trimmmechanismus mechanisch miteinander gekoppelt sein.

In einer Ausführungsform umfasst ein Satz von Anlenkpunkten einen ersten Anlenkpunkt und einen zweiten Anlenkpunkt, wobei der erste Anlenkpunkt über einen ersten Zugstrang mit dem Verzweigungsblock verbunden ist, wobei der zweite Anlenkpunkt über einen zweiten Zugstrang mit dem Verzweigungsblock verbunden ist, wobei der erste Anlenkpunkt und der zweite Anlenkpunkt auf einer Seite der Nickachse angeordnet sind, und wobei der zweite Anlenkpunkt einen größeren Abstand zu der Nickachse hat als der erste Anlenkpunkt. Die Trimmvorrichtung kann so eingerichtet sein, dass der erste Zugstrang und der zweite Zugstrang koordiniert betätigt werden, wobei der Betätigungsweg des ersten Zugstrangs kleiner ist als der Betätigungsweg des zweiten Zugstrangs. Auf diese Weise kann eine Nickbewegung des Kites ausgelöst werden.

Das Kitesystem kann so ausgelegt sein, dass ein Satz von Anlenkpunkten ein oder mehrere Anlenkpunkte umfasst, die auf einer Seite der Nickachse angeordnet sind, und ein oder mehrere Anlenkpunkte umfasst, die auf der anderen Seite der Nickachse angeordnet sind. In einer Ausführungsform sind auf einer Seite der Nickachse mindestens drei Anlenkpunkte angeordnet. Die Nickachse kann benachbart zu dem Druckpunkt des Kites angeordnet sein. Insbesondere kann der in Längsrichtung des Kites betrachtete Abstand zwischen dem Druckpunkt des Kites und der Nickachse kleiner sein als 20 %, vorzugsweise kleiner sein als 10 %, weiter vorzugsweise kleiner sein als 5 % der Strecke zwischen der Vorderkante des Kites und der Hinterkante des Kites in dem betreffenden Abschnitt des Kites. Ist die Nickachse in der Nähe des Druckpunkts angeordnet, so ist nur eine geringe Kraft zum Betätigen des Trimmmechanismus erforderlich. Dies ist insbesondere dann von Vorteil, wenn die zum Betätigen des Trimmmechanismus erforderliche Energie aus der Gondel heraus bereitgestellt wird.

Ebenfalls von der Erfindung umfasst sind Ausführungsformen, bei denen alle Zugstränge vor der Nickachse oder hinter der Nickachse angeschlagen sind. Bei diesen Ausführungsformen ist eine höhere Kraft zum Betätigen des Trimmmechanismus erforderlich.

Die koordinierte Ansteuerung der Anlenkpunkte eines Satzes von Anlenkpunkten mit dem Trimmmechanismus kann so erfolgen, dass die geometrische Form des Kites innerhalb der Längsebene des Kites erhalten bleibt. Die Längsebene wird durch den Satz von Anlenkpunkten und die lokale Zugrichtung aufgespannt. Dies kann erreicht werden, indem der Betätigungsweg, über den die Anlenkpunkte während des Trimmvorgangs bewegt werden im Wesentlichen proportional ist zum Abstand, den der jeweilige Anlenkpunkt zur Nickachse hat. Möglich ist auch, dass die koordinierte Ansteuerung der Anlenkpunkte eines Satzes von Anlenkpunkten mit dem Trimmmechanismus so erfolgt, dass die geometrische Form des Kites innerhalb des Satzes von Anlenkpunkten durch den Trimmvorgang verändert wird. Dies kann erreicht werden, indem es zwischen den Anlenkpunkten des Satzes von Anlenkpunkten eine deutliche Abweichung von dem Proportionalitätszusammenhang gibt. Beispielsweise kann dem Kite durch den Trimmvorgang eine stärker gewölbte Form eingeprägt werden.

Dies hat den Vorteil, dass der Kite trotz geringerer Fluggeschwindigkeit eine hohe Auftriebskraft entwickelt. Möglich ist auch, dem Kite eine weniger stark gewölbte Form einzuprägen, damit sich der Flugwiderstand verringert und eine höhere Fluggeschwindigkeit möglich wird.

Bei einer Nickbewegung des Kites verändert sich die Stellung des Kites relativ zu der Position der Gondel. Betrachtet man die Bewegung innerhalb des Bezugssystems des Kites, also eines Koordinatensystems, innerhalb dessen die Position des Kites unverändert bleibt, so kann die Bewegung als eine Schwenkbewegung der Gondel relativ zu dem Kite beschrieben werden. Der Verstellbereich des Trimmmechanismus kann so groß sein, dass die Schwenkbewegung sich über einen Winkel von wenigstens 20°, vorzugsweise einen Winkel von wenigstens 30°, weiter vorzugsweise einen Winkel von wenigstens 45° erstreckt. Dabei entspricht der Mittelpunkt der Schwenkbewegung der Nickachse.

Die Länge eines Zugstrangs kann verändert werden, indem eine Betätigungsleine eingeholt oder gefiert wird. Die koordinierte Ansteuerung von mehreren Zugsträngen eines Kitesystems kann so erfolgen, dass jedem Zugstrang eine Betätigungsleine zugeordnet ist und die Längenverstellung der Betätigungsleinen separat voneinander erfolgt. Beispielsweise kann jeder Betätigungsleine ein eigener Aktuator zugeordnet sein.

Möglich ist auch eine mechanische Kopplung zwischen einem ersten Zugstrang und einem zweiten Zugstrang, sodass die Länge des ersten Zugstrangs nicht verändert werden kann, ohne dass zugleich die Länge des zweiten Zugstrangs verändert wird. Dies kann beispielsweise verwirklicht werden, indem eine Betätigungsleine eines ersten Zugstrangs und eine Betätigungsleine eines zweiten Zugstrangs zu einem gemeinsamen Aktuator geführt werden, sodass bei Betätigung des Aktuators beide Betätigungsleinen in der Länge verändert werden. Dabei kann der Betätigungsweg der ersten Betätigungsleine gleich sein mit dem Betätigungsweg der zweiten Betätigungsleine oder sich von dem Betätigungsweg zweiten Betätigungsleine unterscheiden. Letzteres kann beispielsweise erreicht werden, indem die Betätigungsleine über eine Welle mit gestuftem Durchmesser angetrieben werden und die erste Betätigungsleine über einen anderen Durchmesser der Welle geführt ist als die zweite Betätigungsleine. Bei mehr als zwei Betätigungsleinen kann entsprechend vorgegangen werden.

Durch den Trimmmechanismus können zwei Zugstränge miteinander gekoppelt sein, die zu einem Satz von Anlenkpunkten gehören. Möglich ist auch, dass Zugstränge miteinander gekoppelt sind, die zu mehreren Sätzen von Anlenkpunkten gehören. In einer Ausführungsform sind durch den Trimmmechanismus zwei Zugstränge miteinander gekoppelt, die auf zwei Seiten einer Längs-Mittelebene des Kites angeordnet sind.

Der Trimmmechanismus kann eine einzelne Betätigungsleine umfassen, mit der ein erster Zugstrang und ein zweiter Zugstrang betätigt werden. Die Betätigungsleine kann über eine Rolle des ersten Zugstrangs und über eine Rolle des zweiten Zugstrangs geführt sein, sodass durch Einholen oder durch Fieren der Betätigungsleine der erste Zugstrang und der zweite Zugstrang in der Länge verändert werden. Bei mehr als zwei Zugsträngen kann entsprechend vorgegangen werden.

Eine Betätigungsleine des Trimmmechanismus, die über eine Rolle geführt ist, kann mit einem Wegbegrenzer ausgestattet sein, sodass die Betätigungsleine nicht mehr weiter über die Rolle läuft, sobald der Wegbegrenzer an die Rolle anstößt. Auf diese Weise können durch das Betätigen einer einzelnen Betätigungsleine je nach Stellung der Betätigungsleine unterschiedliche Wirkungen ausgelöst werden. Eine Betätigungsleine mit einem Wegbegrenzer zu versehen, kann insbesondere dann von Nutzen sein, wenn mehrere Zugstränge mit einer Betätigungsleine gekoppelt sind. Es kann sich um Zugstränge von einem Satz von Anlenkpunkten oder um Zugstränge von mehreren Sätzen von Anlenkpunkten handeln.

Das Kitesystem kann einen ersten Satz von Anlenkpunkten und einen zweiten Satz von Anlenkpunkten umfassen. Bei zwei oder mehr Sätzen von Anlenkpunkten kann jeder Satz die Merkmale aufweisen, die im Zusammenhang des ersten Satzes von Anlenkpunkten beschrieben sind. Die Sätze von Anlenkpunkten können jeweils parallel zur Flugrichtung angeordnet sein.

Das Kitesystem kann zwei oder mehr Sätze von Anlenkpunkten umfassen, die auf einer ersten Seite der Längs-Mittelebene des Kites angeordnet sind. Das Kitesystem kann zwei oder mehr Sätze von Anlenkpunkten umfassen, die auf einer zweiten Seite der Längs-Mittelebene des Kites angeordnet sind. Alle Zugstränge, die sich zu dem ersten Verzweigungsblock erstrecken, können auf der ersten Seite der Längs-Mittelebene angeordnet sein. Alle Zugstränge, die sich zu dem zweiten Verzweigungsblock erstrecken, können auf der zweiten Seite der Längs-Mittelebene angeordnet sein.

Der Trimmmechanismus kann so eingerichtet sein, dass mehrere Sätze von Anlenkpunkten so gekoppelt sind, dass die Nickbewegung mit einem einheitlichen Betätigungsvorgang ausgelöst werden kann. Insbesondere können in die Kopplung Sätze von Anlenkpunkten einbezogen werden, die auf zwei Seiten der Längs-Mittelebene des Kites angeordnet sind.

Die Erfindung betrifft auch eine Vorrichtung, die einen Kraftaufnahmepunkt auf der Erde umfasst und bei der eine von dem erfindungsgemäßen Kitesystem über das Zugseil übertragene Zugkraft auf den Kraftaufnahmepunkt wirkt. Die Vorrichtung kann zum Erzeugen elektrischer Energie ausgelegt sein. Das Kitesystem kann über das Zugseil an eine Kraft-Arbeitsmaschine angeschlossen sein, sodass in einem ersten Betriebszustand die Kraft-Arbeitsmaschine als Generator wirkt, der durch das Zugseil angetrieben wird, und dass in einem zweiten Betriebszustand die Kraft-Arbeitsmaschine als Motor wirkt, mit dem das Zugseil eingeholt wird.

Möglich ist auch, dass das Kitesystem mit einem Kraftaufnahmepunkt eines Schiffs verbunden ist, sodass mit dem Kitesystem eine Antriebskraft für das Schiff erzeugt werden kann. Ein Kraftaufnahmepunkt eines Schiffs ist ein Kraftaufnahmepunkt auf der Erde im Sinne der Erfindung.

Die Erfindung betrifft auch ein Verfahren zum Betreiben eines Kitesystems, bei dem ein Kite über einen Leinenbaum an eine Gondel angebunden ist, bei dem der Leinenbaum einen Verzweigungsblock umfasst, wobei der Verzweigungsblock über einen Steuerzug an die Gondel angeschlossen ist, wobei der Leinenbaum einen ersten Zugstrang umfasst, der sich zwischen dem Verzweigungsblock und einem ersten Anlenkpunkt des Kites erstreckt, wobei der Leinenbaum einen zweiten Zugstrang umfasst, der sich zwischen dem Verzweigungsblock und einem zweiten Anlenkpunkt des Kites erstreckt, wobei mit einem Steuermechanismus die Länge des Steuerzugs zwischen der Gondel und dem Verzweigungsblock verändert wird und wobei mit einem Trimmmechanismus die Länge des ersten Zugstrangs zwischen dem Verzweigungsblock und dem ersten Anlenkpunkt verändert wird.

Das Verfahren kann eine Phase umfassen, in der das Kitesystem mit einem Zugseil eingeholt wird. Das Einholen kann mit einer Geschwindigkeit zwischen 8 m/s und 20 m/s, vorzugsweise zwischen 10 m/s und 15 m/s erfolgen. Das Zugseil kann eingeholt werden, während der Kite innerhalb des Windfensters angeordnet ist.

Die Offenbarung umfasst Weiterbildungen des Verfahrens mit Merkmalen, die im Zusammenhang des erfindungsgemäßen Kitesystems beschrieben sind. Die Offenbarung umfasst Weiterbildungen des Kitesystems, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung einer erfindungsgemäßen Vorrichtung;
- Fig. 2:: eine schematische Darstellung eines Betriebszustands der Vorrichtung aus Fig. 1;
- Fig. 3:: ein erfindungsgemäßes Kitesystem;
- Fig. 4:: eine schematische Darstellung eines erfindungsgemäßen Kitesystems mit Steuermechanismus und Trimmmechanismus;
- Fig. 5:: ein Detail eines erfindungsgemäßen Kitesystems in schematischer Darstellung;
- Fig. 6, 7:: die Ansicht gemäß Fig. 5 bei alternativen Ausführungsform der Erfindung;
- Fig. 8:: einen Aspekt eines erfindungsgemäßen Kitesystems in schematischer Darstellung;
- Fig. 9:: ein Detail eines erfindungsgemäßen Kitesystems;
- Fig. 10:: eine alternative Ausführungsform einer erfindungsgemäßen Vorrichtung.

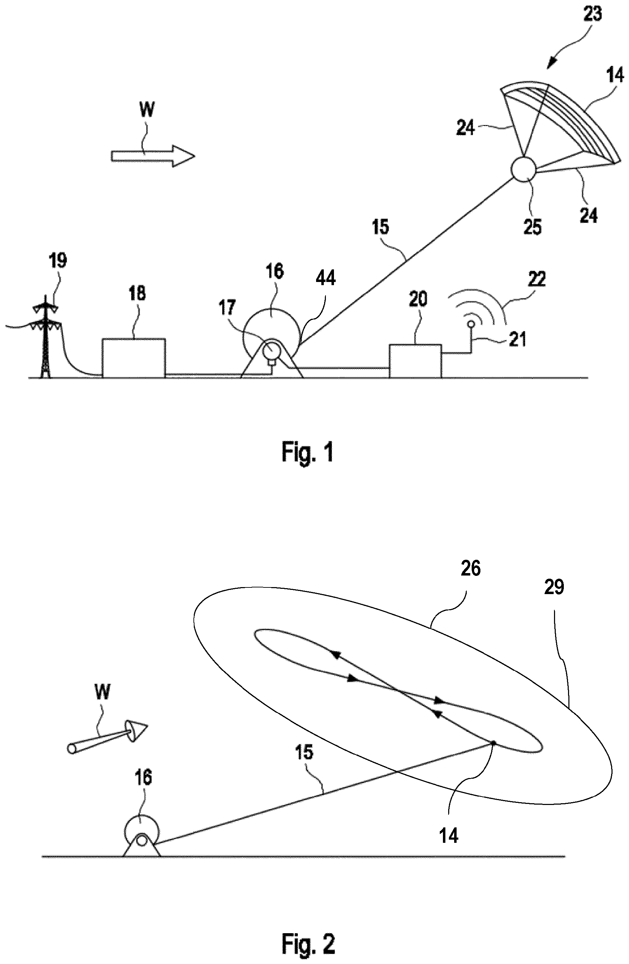

Eine in Fig. 1 gezeigte Vorrichtung ist dazu ausgelegt, unter Verwendung eines erfindungsgemäßen Kitesystems 23 elektrische Energie zu erzeugen. Das Kitesystem 23 umfasst einen Kite 14, der über einen Leinenbaum 24 an eine Gondel 25 angeschlossen ist. Die Gondel 25 ist über ein Zugseil 15 an eine Zugseilwinde 16 angeschlossen. Der Punkt der Zugseilwinde 16, auf dem das von der Gondel 25 kommende Zugseil 15 aufliegt, bildet einen Kraftaufnahmepunkt 44 auf der Erde.

Mit der Zugseilwinde 16 gekoppelt ist eine elektrische Kraftarbeitsmaschine 17, die in einem ersten Betriebszustand als Generator und in einem zweiten Betriebszustand als Motor arbeitet. Die Kraftarbeitsmaschine ist über einen elektrischen Leistungsstrang 18, der einen Umrichter und einen Transformator umfasst, an ein öffentliches Übertragungsnetz 19 angeschlossen, so dass entweder mit der Kraftarbeitsmaschine 17 erzeugte elektrische Energie in das Übertragungsnetz 19 eingespeist werden kann oder die Kraftarbeitsmaschine 17 mit aus dem Übertragungsnetz 19 entnommener elektrische Energie als Motor betrieben werden kann. Die Vorrichtung umfasst eine Steuereinheit 20, die dazu ausgelegt ist, das Zusammenspiel der Komponenten der Vorrichtung zu steuern.

Die Steuereinheit 20 umfasst eine Antenne 21, so dass über eine Funkverbindung 22 Steuersignale mit der Gondel 25 ausgetauscht werden können. Insbesondere werden von der Steuereinheit 20 Steuersignale an die Gondel 25 gesendet, um die Flugrichtung des Kite 14 zu steuern. Unter Nutzung der Steuersignale wird die Länge von Steuerzügen des Leinenbaums 24 verändert, wodurch Einfluss auf die Flugrichtung des Kite 14 genommen wird.

In dem Ausführungsbeispiel gemäß Fig. 2 wird der Kite 14 entlang einer im Wesentlichen quer zur Windrichtung W ausgerichteten liegenden Acht geführt. Die liegende Acht liegt vollständig innerhalb eines Windfensters 29, in dem der Wind W mit hoher Kraft auf den Kite 14 wirkt. Während der Kite 14 der Flugrichtung folgt, wird eine Zugkraft auf das Zugseil 15 ausgeübt, mit der über die Zugseilwinde 16 die Kraftarbeitsmaschine 17 angetrieben wird. Mit der in diesem Betriebszustand als Generator betriebenen Kraftarbeitsmaschine 17 wird die mechanische Energie in elektrische Energie umgewandelt und über den Leistungsstrang 18 in das öffentliche Übertragungsnetz 19 eingespeist. Möglich ist auch, einen Teil der erzeugten Energie in elektrischer Form in einem Energiespeicher des Leistungsstrangs 18 zu speichern. Auf diese Weise kann elektrische Energie erzeugt werden, bis die Länge des Zugseils 15 ausgeschöpft ist und das Zugseil 15 vollständig von der Zugseilwinde 16 ausgefiert ist. Anschließend wird das Zugseil 15 mit der als Motor betriebenen Kraftarbeitsmaschine 17 eingeholt, bevor erneut elektrische Energie erzeugt werden kann.

Für das Einholen wird der Kite 14 bislang in eine Position am Rand des Windfensters 29 geführt, wodurch in jedem Zyklus ein Zeitverlust entsteht. Mit der Erfindung wird die Möglichkeit eröffnet, den Kite 14 mit stark reduziertem Energie- und Zeitaufwand in der Mitte des Windfensters 29 einzuholen.

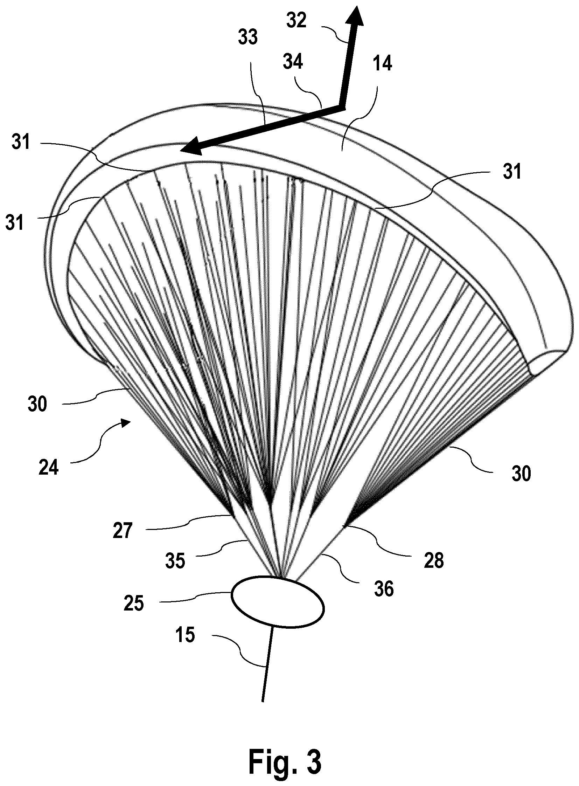

Der Leinenbaum 24 des erfindungsgemäßen Kitesystem 23 umfasst gemäß Fig. 3 eine Vielzahl von Leinen 30, über die Zugkräfte zwischen dem Kite 14 und der Gondel 25 übertragen werden. Jede Leine 30 erstreckt sich zu einem Anlenkpunkt 31 an der Unterseite des Kites 14. Die Anlenkpunkte 31 sind gleichmäßig über die Fläche des Kite 14 verteilt und symmetrisch zu einer Längs-Mittelebene 34 des Kites 14 angeordnet, die durch die momentane Flugrichtung 33 und die Richtung 32 des Zugseils 15 aufgespannt wird. Die in einem äußeren Bereich des Kites 14, also mit einem großen Abstand zur Längs-Mittelebene 34, am Kite 14 angeschlagenen Leinen 30 laufen auf der einen Seite der Längs-Mittelebene 34 in einem ersten Verzweigungsblock 27 zusammen und auf der anderen Seite der Längs-Mittelebene 34 in einem zweiten Verzweigungsblock 28 zusammen. Zwischen dem ersten Verzweigungsblock 27 und der Gondel 25 erstreckt sich ein erster Steuerzug 35. Zwischen dem zweiten Verzweigungsblock 28 und der Gondel 25 erstreckt sich ein zweiter Steuerzug 36.

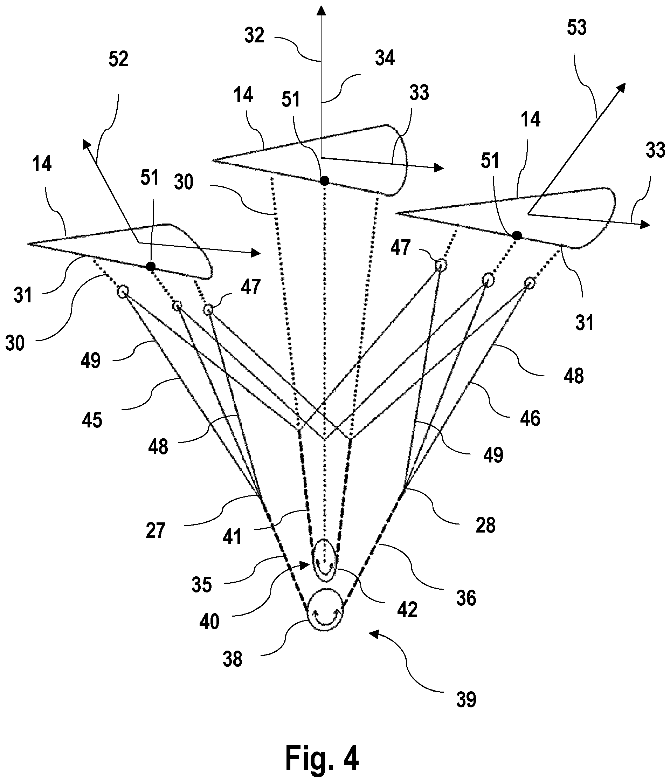

Gemäß Fig. 4, in der der Kite 14 nur schematisch durch drei Längsschnitte angedeutet ist, sind der erste Steuerzug 35 und der zweite Steuerzug 36 miteinander über eine erste Antriebsrolle 38 gekoppelt. Die Steuerzüge 35, 36 bilden gemeinsam mit der ersten Antriebsrolle 38 und einem zu der ersten Antriebsrolle 38 gehörigen Antriebsmotor einen Steuermechanismus 39 des Kitesystems. Wird der Steuermechanismus 39 betätigt, so wird einer der Steuerzüge 35, 36 verkürzt, während der andere sich entsprechend verlängert. Dies führt zu einer Rollbewegung des Kites 14 um eine in der Längs-Mittelebene 34 gelegene Rollachse, die parallel zur momentanen Flugrichtung 33 ausgerichtet ist. Der neue aerodynamische Zustand des Kites 14 führt dazu, dass der Kite 14 eine Kurve fliegt und sich dabei um das Zugseil 15 dreht.

Das Kitesystem umfasst weiter einen Trimmmechanismus 40, bei dem ein Trimmzug 41 über eine zweite Antriebsrolle 42 geführt ist. Ein erstes Ende des Trimmzugs 41 ist mit zwei hinteren Betätigungsleinen 45 gekoppelt, ein zweites Ende des Trimmzugs 41 ist mit zwei vorderen Betätigungsleinen 46 gekoppelt. Jede Betätigungsleine 45, 46 ist mit ihrem einen Ende an einen der Verzweigungsblöcke 27, 28 und mit ihrem anderen Ende an den Trimmzug 41 angeschlossen. In der beispielhaften Darstellung in Fig. 4 gibt es insgesamt vier Wege, auf denen sich die Betätigungsleinen 45, 46 zwischen dem Trimmzug 41 und den Verzweigungsblöcken 27, 28 erstreckt. Jeder dieser Wege führt über eine Rolle 47, die über eine Leine 30 mit einem Anlenkpunkt 31 des Kites verbunden ist.

Eine zwischen dem betreffenden Anlenkpunkt 31 und dem zugehörigen Verzweigungsblock 27, 28 wirkende Zugkraft wird über einen Zugstrang übertragen, der sich von dem Anlenkpunkt 31 über eine Rolle 47 und einen Abschnitt der zugehörigen Betätigungsleine 45, 46 bis zu dem zugehörigen Verzweigungsblock 27, 28 erstreckt. In dem Ausführungsbeispiel in Fig. 4 gibt es auf jeder Seite einen vorderen Zugstrang 48 und einen hinteren Zugstrang 49.

Wird der Trimmmechanismus 40 betätigt, so wird einer der Zugstränge 48, 49 verkürzt und der andere Zugstrang 48, 49 verlängert. Der zwischen den Zugsträngen 48, 49 liegende Anlenkpunkt 31 hat einen festen Abstand zu dem zugehörigen Verzweigungsblock 27, 28, sodass das Verlängern und Verkürzen der Zugstränge 48, 49 zu einer Nickbewegung des Kites 14 führt.

Der mittlere von den drei in Fig. 4 gezeigten Längsschnitten des Kites 14 ist direkt mit dem Trimmzug 41 gekoppelt, sodass auch der zentrale Bereich des Kites 14 eine Nickbewegung vollführt. Die Nickachse 51 im zentralen Bereich des Kites 14 ist senkrecht zur Richtung 32 des Zugseils 15 und senkrecht zur momentanen Flugrichtung 33 ausgerichtet. Aufgrund der gewölbten Form des Kites 14 unterscheiden sich die lokalen Nickachsen 51 in ihre Richtung. In den Bereichen des Kites 14, die einen Abstand zu der Längs-Mittelebene 34 haben, ist die lokale Nickachse 51 rechtwinklig zur Flugrichtung 33 und zur lokalen Zugrichtung 52, 53 ausgerichtet, wie sie sich aus den Zugsträngen 48, 49 ergibt.

Durch die Nickbewegung wird der Anstellwinkel des Kites 14 verändert. Durch Verkürzen des vorderen Zugstrangs 48 und Verlängern des hinteren Zugstrangs 49 kann der Anstellwinkel so verändert werden, dass der Kite 14 nur noch eine geringe Zugkraft auf das Zugseil 15 ausgeübt. Der Kite 14 kann mit der Zugseilwinde 16 innerhalb des Windfensters 29 eingeholt werden, ohne dass die Zugseilwinde 16 eine hohe Kraft aufbringen muss. Dies ermöglicht ein schnelles Einholen des Kites 14 mit einer Geschwindigkeit von beispielsweise mehr als 10 m/s. Das Einholen führt zu einer zusätzlichen Relativbewegung zwischen dem Kite 14 und der Luft, wodurch der Flugzustand des Kites 14 stabilisiert wird.

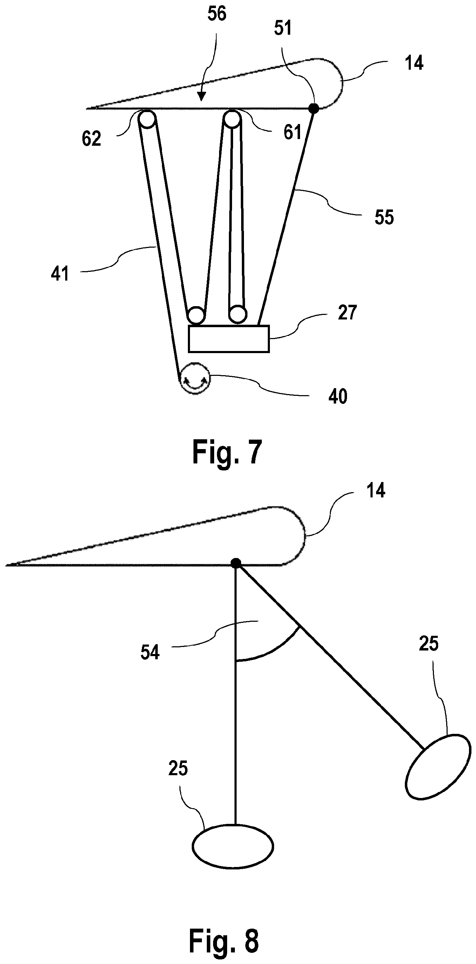

Um dies zu ermöglichen, hat der Trimmmechanismus 40 einem großen Verstellbereich 54. Zwei Extrempositionen des Trimmmechanismus 40 sind in Fig. 8 anhand eines Koordinatensystems dargestellt, innerhalb dessen der Kite 14 eine feste Position hat. Der Verstellbereich 54 erstreckt sich in dem Ausführungsbeispiel über mehr als 40°.

Trotz des veränderten Trimmzustands kann der Kite 14 weiter mit dem Steuermechanismus 39 gesteuert werden. Dies ist deswegen der Fall, weil alle Zugstränge 48, 49, die an einer lokalen Nickbewegung des Kites 14 beteiligt sind, auf denselben Verzweigungsblock 27, 28 geführt sind. Wird der Steuermechanismus 39 betätigt, so bewirkt dies eine Rollbewegung des Kites 14 unabhängig davon, auf welchen Zustand der Trimmmechanismus 40 eingestellt ist.

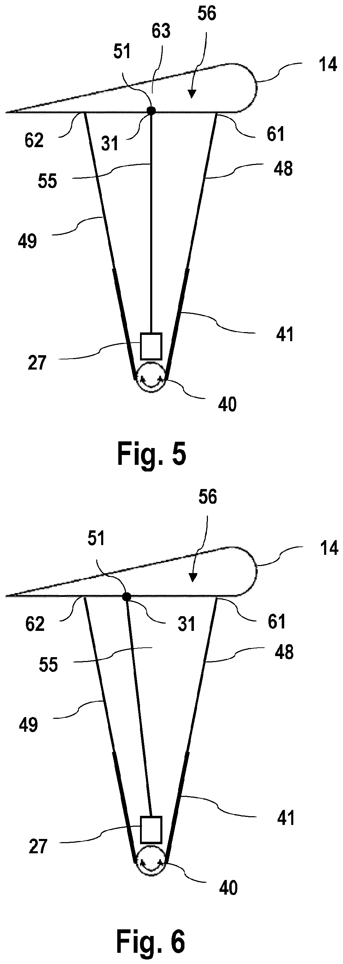

Das dem Trimmmechanismus 39 in Fig. 4 zugrunde liegende Prinzip wird mit Fig. 5 noch einmal anhand einer vereinfachten Prinzipskizze erläutert. Gezeigt ist der in Fig. 4 links dargestellte Längsschnitt durch den Kite 14, der an den ersten Verzweigungsblock 27 angebunden ist. Durch Betätigen des Trimmmechanismus 40 kann der vordere Zugstrang 48 verkürzt und der hintere Zugstrang 49 verlängert werden. Da der mittlere Anlenkpunkt 31 der drei Anlenkpunkte 31, 61, 62 über eine Leine 55 von fester Länge an den ersten Verzweigungsblock 27 angeschlossen ist, ergibt sich eine Nickbewegung, deren lokale Nickachse 51 mit dem mittleren Anlenkpunkt 31 zusammenfällt. Die in einer gemeinsamen Längsebene des Kites 14 angeordneten Anlenkpunkte 31, 61, 62 bilden einen Satz 56 von Anlenkpunkten. In dem Ausführungsbeispiel der Fig. 5 sind es drei Anlenkpunkte 31, die den Satz 56 von Anlenkpunkten 31 bilden. Wie Fig. 3 zeigt, kann der Kite 14 über eine größere Zahl von parallel zueinander liegenden Sätzen 56 von Anlenkpunkten an die Verzweigungsblöcke 27, 28 bzw. an die Gondel 25 angebunden sein.

In Fig. 5 ist der mittlere Anlenkpunkt 31 nahe dem Druckpunkt 63 des Kites gelegen, sodass keine hohe Kraft erforderlich ist, um den Anstellwinkel des Kites 14 zu verändern. Außerdem ist der mittlere Anlenkpunkt 31 mittig zwischen dem vorderen Anlenkpunkt 61 und dem hinteren Anlenkpunkt 62 angeordnet. Bei dieser Konfiguration des Satzes 56 von Anlenkpunkten 31, 61, 62 kann die Nickbewegung um die lokale Nickachse 51 vollführt werden, ohne dass die lokale geometrische Form des Kite 14 sich ändert.

Bei dem alternativen Ausführungsbeispiel in Fig. 6 ist der Satz 56 von Anlenkpunkten 31 so gestaltet, dass die Nickbewegung um die lokale Nickachse 51 zugleich eine Änderung in der lokalen geometrischen Form des Kites 14 bewirkt. Der mittlere Anlenkpunkt hat einen kleineren Abstand zu dem hinteren Anlenkpunkt als zu dem vorderen Anlenkpunkt. Angesichts gleicher Betätigungswege des vorderen Zugstrangs 48 und des hinteren Zugstrangs 49 führt ein Verkürzen des vorderen Zugstrangs 48 und Verlängern des hinteren Zugstrangs 49 zu einer verstärkten Wölbung des Kites 14. Eine verstärkte Wölbung kann beispielsweise gewünscht sein, damit der Kite 14 trotz geringer Fluggeschwindigkeit einen stabilen Flugzustand behält.

In dem Ausführungsbeispiel in Fig. 7 ist der vordere Anlenkpunkt 31 über eine Leine 55 mit fester Länge an den ersten Verzweigungsblock 27 angebunden. Die beiden hinteren Anlenkpunkte 61, 62 sind über den Trimmzug 41 nach Art eines Flaschenzug mit dem ersten Verzweigungsblock 27 gekoppelt. Wird ausgehend von dem in Fig. 7 gezeigten Zustand der Trimmzug 41 gefiert, so bewegt sich der hintere Anlenkpunkt 62 schneller nach oben als der mittlere Anlenkpunkt 61. Es ergibt sich eine Nickbewegung, dessen lokale Nickachse 51 vor den beiden nach oben bewegten Anlenkpunkten 61, 62 liegt. Die lokale geometrische Form des Kites 14 bleibt bei der Nickbewegung erhalten. Der Trimmzug 41 bildet bei dieser Ausführungsform den Zugstrang für die beiden bewegten Anlenkpunkte 31 zwischen dem Kite 14 und dem ersten Verzweigungsblock 27, dessen Länge verändert werden kann.

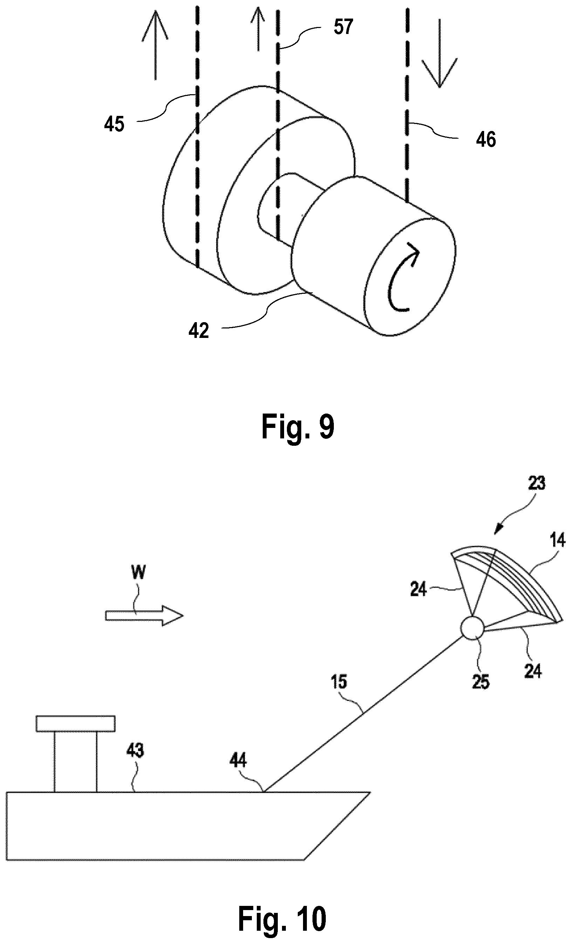

Das Kitesystem in Fig. 4 ist so gestaltet, dass die vordere Betätigungsleine 45 und die hintere Betätigungsleine 46 identische Betätigungswege haben. Falls dies nicht gewünscht ist, kann für den Trimmmechanismus 40 eine Antriebsrolle 42 verwendet werden, die einen gestuften Durchmesser hat. In Fig. 9 ist ein Ausführungsbeispiel einer solchen gestuften Antriebsrolle 42 gezeigt, über die neben der vorderen Betätigungsleine 45 und der hinteren Betätigungsleine 46 eine dritte Betätigungsleine 57 geführt ist. Aufgrund der drei unterschiedlichen Durchmesser der Antriebsrolle 42 unterscheiden sich die Betätigungswege der drei Betätigungsleine voneinander.

In Fig. 10 ist eine alternative Ausführungsform der Erfindung gezeigt, bei der das erfindungsgemäße Kitesystem 23 genutzt wird, um eine Antriebskraft für ein Schiff 43 zu erzeugen.

## Patentansprüche

1. Kitesystem mit einem Kite (14), mit einer Gondel (25) und mit einem Leinenbaum (24), wobei der Kite (14) über den Leinenbaum (24) an die Gondel (25) angebunden ist, wobei der Leinenbaum (24) einen Verzweigungsblock (27, 28) umfasst, wobei der Verzweigungsblock (27, 28) über einen Steuerzug (35, 36) an die Gondel (25) angeschlossen ist, wobei der Leinenbaum (24) einen ersten Zugstrang (48) umfasst, der sich zwischen dem Verzweigungsblock (27, 28) und einem ersten Anlenkpunkt (61) des Kites (14) erstreckt, wobei der Leinenbaum (24) einen zweiten Zugstrang (49) umfasst, der sich zwischen dem Verzweigungsblock (27, 28) und einem zweiten Anlenkpunkt (62) des Kites (14) erstreckt, mit einem Steuermechanismus (39), um die Länge des Steuerzugs (35, 36) zwischen der Gondel (25) und dem Verzweigungsblock (27, 28) zu verändern, und mit einem Trimmmechanismus (40), um die Länge des ersten Zugstrangs (48) zwischen dem Verzweigungsblock (27, 28) und dem ersten Anlenkpunkt (61) zu verändern.

2. Kitesystem nach Anspruch 1, umfassend einen ersten Steuerzug (35) und einen zweiten Steuerzug (36), wobei der erste Steuerzug (35) auf einen anderen Abschnitt des Kites (14) wirkt als der zweite Steuerzug (36).

3. Kitesystem nach Anspruch 1 oder 2, wobei der Steuermechanismus (39) dazu ausgelegt ist, eine Rollbewegung des Kites (14) auszulösen.

4. Kitesystem nach einem der Ansprüche 1 bis 3, wobei der Trimmmechanismus (40) dazu ausgelegt ist, eine Nickbewegung des Kites (14) um eine Nickachse (51) auszulösen.

5. Kitesystem nach Anspruch 4, wobei die Nickachse (51) einen festen Abstand zu dem Verzweigungsblock (27, 28) hat.

6. Kitesystem nach Anspruch 4 oder 5, wobei die Nickachse (51) benachbart zu dem Druckpunkt (63) des Kites (14) angeordnet ist.

7. Kitesystem nach einem der Ansprüche 1 bis 6, wobei der Trimmmechanismus (40) dazu ausgelegt ist, sowohl die Länge des ersten Zugstrangs (48) zwischen dem Verzweigungsblock (27, 28)) und dem ersten Anlenkpunkt (61) als auch die Länge des zweiten Zugstrangs (49) zwischen dem Verzweigungsblock (27, 28) und dem zweiten Anlenkpunkt (62) zu verändern.

8. Kitesystem nach Anspruch 7, wobei der erste Zugstrang (48) und der zweite Zugstrang (49) über den Trimmmechanismus (40) mechanisch miteinander gekoppelt sind.

9. Kitesystem nach einem der Ansprüche 1 bis 8, wobei der Trimmmechanismus (40) so ausgelegt ist, dass dem Kite (14) durch den Trimmvorgang eine stärker gewölbte Form eingeprägt wird.

10. Kitesystem nach einem der Ansprüche 1 bis 9, wobei der Trimmmechanismus (40) bezogen auf das Koordinatensystem des Kites (14) einen Verstellbereich von wenigstens 20°, vorzugsweise von wenigstens 30°, weiter vorzugsweise von wenigstens 45° abdeckt.

11. Kitesystem nach einem der Ansprüche 1 bis 10, wobei durch den Trimmmechanismus (40) zwei Zugstränge (48, 49) miteinander gekoppelt sind, die auf zwei Seiten einer Längs-Mittelebene (34) des Kites (14) angeordnet sind.

12. Vorrichtung, umfassend ein Kitesystem (23) und einen Kraftaufnahmepunkt (44) auf der Erde, wobei das Kitesystem (23) nach einem der Ansprüche 1 bis 11 ausgebildet ist und wobei die von dem Kitesystem (23) über das Zugseil (15) übertragene Zugkraft auf den Kraftaufnahmepunkt (44) wirkt.

13. Vorrichtung nach Anspruch 12, wobei das Kitesystem (23) über das Zugseil (15) an eine Kraft-Arbeitsmaschine (16) angeschlossen ist, sodass in einem ersten Betriebszustand die Kraft-Arbeitsmaschine (16) als Generator wirkt, der durch das Zugseil (15) angetrieben wird, und dass in einem zweiten Betriebszustand die Kraft-Arbeitsmaschine (16) als Motor wirkt, mit dem das Zugseil (15) eingeholt wird.

14. Verfahren zum Betreiben eines Kitesystems, bei dem ein Kite (14) über einen Leinenbaum (24) an eine Gondel (25) angebunden ist, bei dem der Leinenbaum (24) einen Verzweigungsblock (27, 28) umfasst, wobei der Verzweigungsblock (27, 28) über einen Steuerzug (35, 36) an die Gondel (25) angeschlossen ist, wobei der Leinenbaum (24) einen ersten Zugstrang (48) umfasst, der sich zwischen dem Verzweigungsblock (27, 28) und einem ersten Anlenkpunkt (61) des Kites (14) erstreckt, wobei der Leinenbaum (24) einen zweiten Zugstrang (49) umfasst, der sich zwischen dem Verzweigungsblock (27, 28) und einem zweiten Anlenkpunkt (62) des Kites (14) erstreckt, wobei mit einem Steuermechanismus (39) die Länge des Steuerzugs (35, 36) zwischen der Gondel (25) und dem Verzweigungsblock (27, 28) verändert wird und wobei mit einem Trimmmechanismus (40) die Länge des ersten Zugstrangs (48) zwischen dem Verzweigungsblock (27, 28) und dem ersten Anlenkpunkt (61) verändert wird.
